# EUROPEAN PATENT APPLICATION

(11) **EP 4 789 879 A1**
(43) Date of publication of application: **12.08.2026**
(21) Application number: 25157127.9
(22) Date of filing: 11.02.2025
(51) Int. Cl.: B60C 23/00, B60C 23/04

(54) **METHOD FOR AUTOMATIC LOCATION OF THE POSITION OF A TIRE ON A MULTI-WHEELED VEHICLE**

(71) Applicant: Bridgestone Europe NV/SA, 1930 Zaventem (BE)
(72) Inventor: LITI, Chiara, 00128 Roma (IT); ALLEVA, Lorenzo, 00128 Roma (IT); BORTOLOTTO, Valerio, 00128 Roma (IT); GIOVANNINI, Simone, 00128 Roma (IT); BENEDETTI, Roberto, 00128 Roma (IT); ROSATI, Jessica, 00128 Roma (IT); POGGI, Marco, 00128 Roma (IT); TESTI, Giulio, 00128 Roma (IT); INCORVAIA, Salvatore, 00128 Roma (IT); CACCAMI, Maria Cristina, 00128 Roma (IT)
(74) Representative: Bardehle Pagenberg Partnerschaft mbB Patentanwälte Rechtsanwälte

(57) **Abstract**

Methods for determining the position of a tire of a vehicle are disclosed. The methods comprise obtaining an indication of a load of the tire, detecting a variation of the indication over time and obtaining an information of a lateral acceleration of the vehicle. It is determined, based on the detected variation of the first indication and the information of the lateral acceleration, whether the tire is mounted on the left or right side of a longitudinal axis of the vehicle. Corresponding apparatuses, computer programs and vehicles are also disclosed.

## Description

### Field of the invention

This disclosure refers to a method for auto-locating tire positions of a vehicle. It also includes an apparatus, a computer programme and a vehicle adapted to carry out the method.

### Technical background

Reliability and efficiency of transportation are not only central concerns to the passengers and transported goods, but also for the service providers and beneficiaries of the transport. It is of crucial importance to monitor vehicle-based parameters to detect relevant deviations. By early detection of relevant deviations, a vehicle conductor or a fleet manager can take adequate reactions.

One central issue in road transportation is the state of the vehicle tires. It is important to ensure that the tires are free from any damages. This condition can be evaluated by monitoring the tire tread/tire wear. Also, it is important to ensure that tires remain inflated within a pre-defined range of pressure. By monitoring the tire pressure, damages to the tire may be prevented or spotted early and a tire change can be carried out on time.

In order to monitor the tire pressure, pressure and temperature are often used jointly. A pressure sensor may rely on a piezo-electric effect or a change of conductivity to measure the tire pressure. Information on the temperature is used to correct the pressure measurement since, in the absence of any volumetric change, the pressure augments when the temperature increases.

Modern temperature and pressure sensors are commonly mounted in a single case and placed inside of a tire (tire mounted sensor TMS) or connected to the rim. To further automize pressure monitoring, the measurements are typically transmitted wirelessly to a vehicle-based reception unit. This reception unit may be part of an on-board computer or forward the information to an on-board computer. This computer may monitor and display the tire pressures to an operator. In this capacity, the monitoring system is referred to as a tire pressure monitoring system (TPMS).

As pointed out here above, tires sometimes have to be changed outside of scheduled operations. If a tire is deflated as a consequence of external damage, only this tire may need to be changed. In other circumstances, all tires of an axle may be changed. This may be necessary when these tires have been connected to the vehicle for a long time or the tires have been subject to particular large loads. It frequently occurs that a set of tires of an axle is transferred to a different axle to replace the tires of this latter axle.

To enable an operator to react to any pressure change of a tire, it has proven very convenient to show the position of the deteriorated tire to an operator. It is possible to program the respective tire positions to the TPMS. Hence, the tire parameters can be associated to a tire position by means of an identification number. When a tire change has been effectuated, the TPMS must be notified of the change. This task can be carried out manually by the operator. However, it is advantageous if the TPMS itself can automatically detect a tire change. Some approaches have found implementations to detect a single tire change. If all other tire IDs are known, the TPMS may recognize a new tire by detecting a single unknown ID.

This method proves inefficient when several tires are exchanged or the respective positions of the tires are altered. It also proves inefficient when a towing vehicle is connected to a different, so far unknown, trailer.

It should therefore be the aim to provide a method to automatically associate a tire position to a pressure, temperature or any other signal. Some approaches take into account the field strength of the respective radio signals (Received signal strength indicator). This approach may help to identify the respective axle of a tire, but it is too imprecise to locate the exact tire position. Another approach using RSSI is to use several receivers. The receivers may be placed asymmetrically, so they receive stronger signals of different tires of a same axle according to their position relative to the respective receiver.

The present disclosure suggests an alternative and more reliable approach to automatically associate a tire position to a pressure and/or temperature and/or a tire tread and/or a tire wear signal.

### Summary of the invention

This present disclosure relates to a method for determining the position of a first tire of a vehicle. In a first step, a first indication of a load of the first tire is obtained and variations of the first indication over time are detected. Another step is to obtain an information of a lateral acceleration of the vehicle. Based on this information, the method then determines whether the first tire is mounted on the left or right side of a longitudinal axis of the vehicle. The method may be carried out by a control unit, which may be integrated into an on-board computer of the vehicle or which may be separate thereof.

The method is advantageous as common auto-location methods fail to determine the exact tire position in the case of dual-tires. To distinguish a left and a right tire, measurements of angular velocity or rotation direction have been suggested. These approaches are problematic as a distinction between a left tire and a right tire may not be sufficient, if an axle has dual-tires. A dual-tire is typically formed by two tires mounted together in opposite orientations. As pressure and temperature sensors are often mounted in a standardized direction, each tire of the dual-tire has opposite rotation directions. Hence, a left and a right dual-tire cannot be differentiated any more. Another drawback of angular measurements is that they require vehicle-based sensors. While ABS sensors may be used for this task, some vehicles, such as large lorry trailers, may not have ABS sensors for every wheel. As can be seen below, by using the suggested method in the present disclosure, information about whether a tire is a left or a right tire can be gained regardless of whether there is a single or a dual-tire to either end of an axle.

Another advantage of the method is its easy and cost-efficient implementation. Unlike other technologies, the method of the present disclosure doesn't rely on cumbersome and complex technologies. Approaches in the past have consisted in using vehicle-based low-frequency antennas that serve to excite targeted tire sensors. To avoid interferences, a low frequency is used such as to restrict the range of the excitation signal. However, this requires a large number of antennas installed in the vehicle. In fact, every single tire needs an own antenna. This proves costly and complicated. Also, specific tires and/or specific tire sensor may be needed to adapt to the frequency in use. The risk of technical failure of such technology is also much higher than a technical implementation of the present method.

The tire load may be obtained by a tire-mounted sensor that detects tire deformation. Typically, a higher load will correspond to a larger tire surface in contact with the ground. It is not necessary that a time-continuous value for the load is obtained. It is sufficient that values of the load are obtained with such a frequency that a variation of the load on the tire during a left or right curve of the vehicle can be determined.

The lateral acceleration of the vehicle may be obtained by a tire sensor and forwarded to the control unit and/or provided by vehicle-based telematics to the control unit. The lateral acceleration is a vector perpendicular to the vehicle's driving direction when all tires are in their default middle position. The vector is parallel to the surface of the ground. This vector can be interpreted as resulting from a centripetal force applied to the centre of gravity of the vehicle. The lateral acceleration may be positive or negative. If the lateral acceleration is different from zero, the vehicle is following a curve. The sign of the lateral acceleration depends on the orientation of the vehicle's coordinate system. In any case, if the acceleration is equal to zero, the vehicle is going straight forward or backward (or not moving at all).

The longitudinal axis of the vehicle is an axis orientated according to the vehicle's standard driving direction when the tires are in their default middle position. Generally, the longitudinal axis will be perpendicular to the vehicle's axles and typically pass through the centre of any axle. The longitudinal axis is parallel to the underground of the vehicle. In certain embodiments, the axis may be orientated along the vehicle's designated forward moving direction. Especially, if the vehicle has no designated forward direction, any orientation of the axis is acceptable as long as left and right tires can be identified hereby.

The present disclosure supposes that the first tire is either to the left or to the right side of the longitudinal axis. In this case, it can be determined whether the tire is on the left or the right side of the longitudinal axis. During a curve movement of a vehicle, the inner tire (during a left curve the left tire is the inner tire, if the longitudinal axis is orientated toward the forward direction) is subject to a lower load than the outer tire. It is not necessary to know the outer tire's load, even if this value will often be available in practice. It is sufficient to know the first tire's variation of load over time. As this load will decrease for an inner tire in a curve movement, observation of a single tire is sufficient to determine the left/right position of this single tire. Thus, the present disclosure allows determining whether the first tire is a left or right tire by a forward movement and any curve movement of the vehicle. The conditions will generally be met after a short journey, so that the auto-location of the tire (at least with respect to its left/right orientation) can be completed within a short amount of time and without any additional manual efforts. After the detection, a tire position may be memorized by an on-board system.

There may be cases where the method will find an insufficient correlation of the tire's load variation and the lateral acceleration of the vehicle. In this case, the tire may be positioned on the vehicle's longitudinal axis, which may be the case e.g. for a motorcycle.

A second aspect of the present disclosure is to determine information on the distance of the first tire by measuring a field strength of a first wireless transmission signal of the first tire. The first wireless transmission signal may be the first indication. It is also possible that the wireless transmission signal contains (only) other information such as tire pressure, temperature, residual tread depth or remaining lifetime of a tire (e.g., remaining time or mileage of tire life). It is even possible that the wireless transmission signal doesn't contain any information at all (e.g. just a carrier envelope). Wireless communication can comprise the use of electromagnetic waves such as high frequency radio waves, but other wireless transmission means are possible. The distance primarily refers to the distance between the transmitter and a receiving unit (e.g. within the control unit) in the vehicle, or it may also simply be the distance between the transmitter and the control unit. Often, the transmitter will be part of a tire load and/or a tire pressure/temperature sensor. Of course, it is highly advantageous to localize the transmitter within the wheel or the tire, since otherwise an additional mechanical connection or a wire connection to the vehicle is needed. As the wheel is in continuous rotation relative to the vehicle, the practical implementation proves to be more difficult in this case.

By measuring the field strength of a transmission signal such as a radio signal, it can be estimated how far the signal has travelled. In general, a radio wave expands on a spherical surface, so the signal power decreases by the square of the radius. An estimation of the distance requires knowledge of the transmitter and receiver antenna's gains and the radio wave frequency. It is also possible to use a directional antenna for transmission purposes. By comparing the signal strength to a standard signal strength for a given distance, it is possible for the control unit to estimate the distance.

The tire load indication may be obtained several times per wheel revolution. One possible, non-exhaustive example could be as follows: The signal strength may vary according to whether a tire-mounted load sensor is in a three, six, nine or twelve o'clock position, as in every case the relative distance to a reception unit will be slightly different. However, from these different values of the field strength a mean value can be obtained that may serve the purpose of determining whether a tire is on the left or the right side of a vehicle. In other embodiments, the tire load information may only be transmitted at one single tire position (other information may be transmitted at the same tire position or at a different tire position). In the case of only one transmission per revolution, it is not necessary to take an average value, but the single value can be used directly.

A third aspect of the present disclosure comprises a step of obtaining a second wireless transmission signal of a second tire, preferably a second wireless transmission signal of a second indication of a load of the second tire, wherein the second tire is mounted to the vehicle on a different axle than the first tire and a second step of determining, based on the field strength of the first wireless transmission signal of the first tire, preferably the first wireless transmission signal of the first indication, and a field strength of the second wireless transmission signal of the second tire, preferably a second wireless transmission signal of the second indication, which of the tires is mounted to which axle. This aspect relates to the second aspect as it takes into account two signals of two respective tires. As mentioned above, any wireless transmission signal can be used. Thus, the wireless transmission signal may not include the load indication of the tire, but the pressure and/or the temperature and/or the residual tread depth and/or the remaining lifetime of the tire. It is also possible that the transmission signal is "empty", not containing any information, but only a signal envelope. By comparing the signal strengths of each tire, it is possible to determine which tire is located further away from a receiving antenna. Henceforth, it is not necessary to estimate the distance. It suffices to rank the tires relatively according to their respective signal strengths. In general, the axles of a vehicle will have different spacings to a receiving antenna, so it is possible to allocate an axle to a given signal of a tire.

It should be clarified that the field strength of a transmission signal is not only subject to the distance and various other parameters such as the gains of the transmission and reception antenna, but also subject to obstacles and interferences with other radio signals. However, the relative signal strengths prove to be reliable as, often, the respective signals suffer comparable influences. It is possible to add another reception unit to obtain more reliable results. In some cases, this might seem preferable, for example if the relative distance between axles is very small compared to the respective distances to a single reception unit. However, this depends largely on the sensitivity of the receiving antenna, too. Reception units do not need to be placed on the longitudinal axis of the vehicle, it is possible to place them asymmetrically to obtain more reliable results and/or find another differentiation criterion between a left and a right tire.

By combining the above aspects of the present disclosure, it is possible to locate every tire of a multiple-axled vehicle, if every axle has a maximum of two tires and every tire transmits information via a signal comprising a field strength. This disclosure can for example be utilized for cars, trucks, busses and lorries. It is also possible to implement this method for trains if they have wheels with inflated tires (the Parisian Metro is an example of a train having inflated tires). The method could also be used for aircraft tires.

Another aspect of the present disclosure tackles the problem of auto-locating a vehicle's tires when the vehicle comprises dual-tires. A dual-tire (otherwise referred to as double-tire or twin-tire) is a set of two tires mounted together. In general, an axle comprises two or four tires, wherein in the latter case the axle has a dual-tire to either side. This configuration is not exhaustive, as other configurations are possible.

A dual tire has an inner and an outer tire. Both tires being to a single side of a longitudinal axis, one tire is necessarily closer to the longitudinal axis than the other. It can be proven that the inner tire of a dual-tire is generally subject to a higher load than the other tire of a dual-tire. As most of a vehicle's weight will be localized in between the tires of a vehicle, the axle will be bent slightly imposing a stronger force on the inner tire than on the other tire of a dual-tire. This relation can be used to determine which of the two tires is an inner or an outer tire of a dual-tire. This requires that both tires of a dual-tire transmit wireless transmission signals. This may be a wireless transmission signal comprising indications of the respective tire load. Unlike in the case when the lateral acceleration is correlated with the variation of a single tire load over time to determine whether a tire is left or right of the longitudinal axis, the variation of tire load does not deliver sufficient information in the case of a dual-tire. In a curve movement, the load of both tires of a dual-tire will either both decrease or both increase depending on whether the dual-tire is an inner tire or an outer tire in the curve movement. Also, an absolute load measurement will not be sufficient as the vehicle may have a variable weight according to the number of passengers, amount and type of cargo and the size and number of trailers.

Another aspect of the present disclosure takes into consideration a load distribution profile. This profile can be seen as a stochastic distribution of load differences between two tires of a dual-tire. As pointed out above, the inner tire will be subject to a higher load than the outer tire of a dual-tire. Thus, it is possible to observe load data of a vehicle to set up a load distribution which shows the occurrence of load differences between inner and outer tires of a dual-tire over a long-time use of the vehicle. This distribution is less dependent on a vehicle's current condition such as cargo, speed, lateral acceleration etc. This way, the reliability of the load measurement can be validated and possible error probabilities can be determined. It is also possible to take into account the flexion of an axle to gain a load distribution profile between two different tires of a dual tire.

Another aspect of the present disclosure to determine whether a tire of a dual-tire is an inner or outer tire is the use of the field strength of the respective transmission signals. This approach can be used together with the information of the load of both tires of a dual-tire or in a stand-alone mode only taking into consideration the field strengths of a transmission signal. In one implementation, the fact that the wireless transmission signal of an outer tire has to traverse the material of the inner tire is taken into account. Subsequently, the field strength of the outer tire transmission signal will be weaker than the inner tire transmission signal. This approach can rely on the mean RSSI of both tires. Another non-exhaustive approach is to take into consideration the strength of a signal during a wheel revolution. If both transmitters happen to be in a twelve o'clock position at a given time, one of the transmitters will be in three o'clock position when the other transmitter is in a nine o'clock position. These positions are referenced from the view of an external observer. In fact, as both tires are oriented in opposite directions, their relative rotational direction is inverted. As a consequence of this, their corresponding RSSI are sinusoidal and phase shifted. Of course, the transmitters need not meet in the twelve o'clock position but the principle remains the same in most cases. However, the latter approach may not always be conclusive. In some cases, it may prove advantageous to have a plurality of receiving antennas to reach even clearer results. In any case, the latter approach requires that measurements are carried out more than once during a revolution period.

The present disclosure allows for practical benefits. As pointed out above, an operator of the vehicle or a fleet manager is concerned about the physical parameters of a tire that are relevant to monitor a tire's overall state. Primarily, a human operator is interested in the tire pressure, the tire temperature (especially to correct measurements of pressure), the residual tread depth and/or the remaining lifetime of the tire. So, in a further aspect of the present disclosure, the tire mounted sensor or a comparable sensor transmits a tire's temperature and/or pressure and/or residual tread depth and/or the remaining lifetime of the tire. This information might be included in the same signal as the load information. However, it is possible that this information is transmitted in a separate signal. The signals could exemplarily differ by their frequency, field strengths, repetition rates and timings. If the signals are distinct, it must be ensured that the signals can be associated to each other. This can be implemented in manifold ways such as using specific identifiers, IDs. It should also be noted that the field strength of the second signal could be used to obtain information about the distance of the tire to a reception unit, too. Most convenient seems the use of a single sensor unit that comprises at least a load, a pressure and a temperature sensor as well as a single transmission unit.

In any case, the present disclosure aims to associate temperature and/or pressure measurements of a tire to the respective tire position. By doing so, an operator or a fleet manager can be informed about the exact position of pressure, temperature, residual tread depth, remaining lifetime of the tire and other information.

The present disclosure therefore includes another aspect according to which the information is displayed to an operator. This can be achieved by means of a tire pressure monitoring system. This information may be displayed permanently or temporarily. It is possible to implement a software to the on-board computer that allows an operator to see the tire positions, select an overview showing the tire load, pressure, temperature, residual tread depth, remaining lifetime etc of one or all of the vehicle's tires.

In another aspect of the present disclosure, a system such as the TPMS can issue acoustic or visual warnings when a tire parameter becomes critical. This can be determined by a computer logic that constantly verifies a given condition such as that all the measured tire parameters are within a pre-defined range. If this condition is not fulfilled, a warning may be issued. By doing so, an operator or a fleet manager can react and take actions to verify the specific tire for potential damages.

A further aspect of the present disclosure comprises the transmission of the position, load, pressure/temperature and/or other parameters of a tire to a network-based information system. In many cases, informing a conductor about a deviation is not sufficient. When a technical problem is detected, a fleet manager or another responsible person must have notice in order to take necessary steps such as informing a client about a delay, scheduling an inspection or even replacing a vehicle for a scheduled transportation.

It seems most convenient to upload information to the internet where the information can be stored in a cloud or be redirected directly to a company server. This approach allows for a central and real-time management of a company's vehicle fleet without any prior human intervention. This turns out to be advantageous if an information cannot be delivered by the conductor without having to stop the vehicle and carrying out further analysis. In some cases, language issues may be a problem in human communication. Also, misunderstandings are more likely to occur when a human transmission of information via cell phone is carried out.

Another aspect of the present disclosure concerns an apparatus comprising means to carry out the above steps of the method. This can primarily be a micro grid or a computing circuit carrying out the steps of the method. It is not necessary that this apparatus contains a receiving antenna; it is possible that another device receives the transmission of a tire mounted sensor and forwards it to the apparatus carrying out the method. In many cases, it seems advantageous that the apparatus itself comprises means for directly receiving the wireless transmission. It may also prove advantageous that the apparatus of this disclosure includes the TPMS or is an integral part of the on-board computer. In general, the apparatus need not include the tires and its sensors. In many cases, the tire sensors are standardized, so a wide range of tires will be compatible with the apparatus. However, the apparatus may also include the tires, too.

Another aspect of the present disclosure is a computer program comprising instructions to perform the suggested method. The computer program may include a wide variety of solutions beginning with machine code or assembly language and including high level programming languages. As a corresponding device may be a simple micro controller or a complex computer including a high-level operating system, the computer program can have a diverse implementation.

Another aspect of the present disclosure is a vehicle which comprises a plurality of axles. The vehicle comprises means for obtaining an indication of a load of each of the tires, means for detecting the variation of the indication over time, means for obtaining information of a lateral acceleration of the vehicle, means for determining, based on the detected variations of the indications and the information of the lateral acceleration, information on a positioning of each of the tires as to whether a respective tire is mounted on the left or right side of a longitudinal axis of the vehicle. In other words, the above method(s) and apparatus(es) may be implemented in the vehicle and used for determining the position of each tire. This vehicle may further comprise means for a wireless transmission of information to a vehicle-based reception unit. Based on the field strength of the respectively transmitted signal and/or based on a lateral acceleration of the vehicle and a variation of the tire load over time and/or based on the respective tire loads, the position of any of the plurality of tires mounted to the vehicle may be determined. As pointed out above, the means within a tire will often be a single sensor/transmitter group within a single case. This, however, need not always be the case. Many new cars, trucks, busses and lorries have these means. Yet again, it is not necessary that the reception unit carries out the steps of the method. It is possible that the reception unit passes the data to another vehicle-based apparatus carrying out the steps to determine a tire's position to a given set of pressure and/or temperature measurements. This vehicle is not limited to two axles or two tires per axle.

In an additional aspect of the present disclosure, the vehicle may have at least one axle comprising at least four tires. Two of these tires are coupled together as a dual-tire. In general, this axle has four tires, two tires each being coupled together to form two dual-tires to either side of the longitudinal axis. This arrangement is, however, not exhaustive. By implementing the above method, the two tires of a dual-tire can be distinguished by their tire load and/or their tire load and the respective field strength of a wireless transmission.

According to another aspect of the present disclosure, the vehicle comprises at least one towing or pushing vehicle and at least one trailer. A trailer is characterized by a non-contribution to the movement of the vehicle, although a trailer may comprise means to exert mechanical force to move the vehicle. In this respect, a trailer is not characterized as such by its hypothetical function as possible towing and/or pushing function, but by its factual passivity in a train of vehicles. A typical example of a trailer is a lorry trailer that doesn't have any own engine. Another example can be a train waggon or even an independent vehicle comprising its own engine but being towed or pushed by another vehicle.

In a further aspect of the vehicle, the vehicle is equipped with a tire monitoring system. This system may include an automatic warning system including acoustic and/or visual features. It is not necessary that a tire pressure or any other parameter is displayed in real-time. A single mean indicating any deviation of a given tire from a pre-set range is sufficient. Additionally, means for transmitting information to a network-based communication system can be implemented.

### Short description of the figures

Fig. 1a depicts an exemplary method to determine a tire position relative to a longitudinal axis of a vehicle;
Fig. 1b illustrates an exemplary overview of the sequence of steps carried out to fully determine a tire position;
Fig. 2 illustrates a principle of field strength measurement of a wireless transmission;
Fig. 3 illustrates a principle of field strength measurement of a wireless transmission in a multiple-axled vehicle;
Fig. 4 depicts an exemplary axle characterization of tires using the RSSI;
Fig. 5 illustrates a principle of determining the position of a tire relative to a longitudinal axis;
Fig. 6 shows an exemplary correlation of lateral acceleration and load transfer of a single given tire over time;
Fig. 7 illustrates a principle of load comparison in the situation of a dual-tire;
Fig. 8 shows an exemplary real axle deformation and load difference distribution;
Fig. 9 shows an exemplary transmission of information using a cloud-based service;
Fig. 10 shows a situation of a vehicle comprising a towing and a trailer vehicle.

### Detailed description of the figures

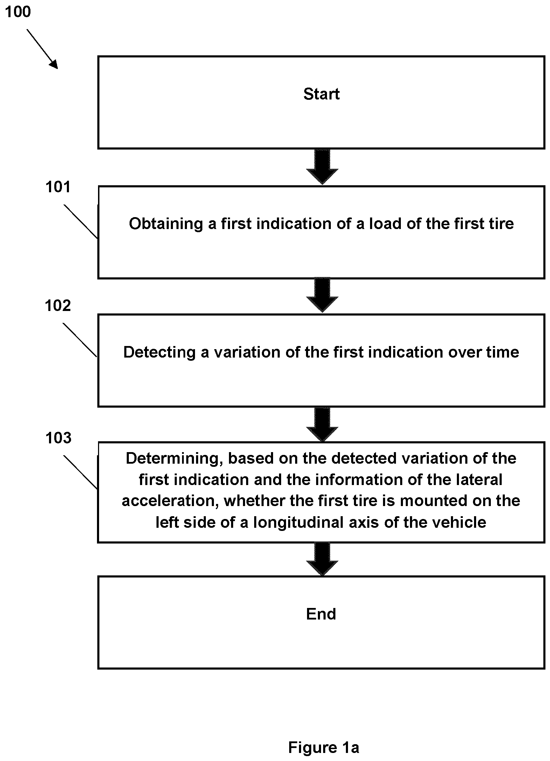

Fig. 1a shows an overview of an exemplary method 100 of the present disclosure. As box 101 indicates, the first step of the method comprises obtaining a first indication of a load of the first tire. The indication may be sent by a sensor/transmitter unit within the wheel or tire. This information may be received by a control unit by means of an antenna. The antenna may be located near to or even be a part of the control unit. It is also possible that the antenna be placed at a different position than the control unit. In this case, the received signal may be transmitted by wire or cable to the control unit. The control unit may be part of an on-board computer of the vehicle or may be a separate unit possibly placed remotely from the board computer. At step 102, a variation of the first indication over time may be detected. As pointed out above, this indication may be the tire load. In general, it is sufficient to monitor a single tire. Further knowledge about indication about other tires may be added if regarded useful. The aforementioned control unit may detect the said variation by an electronic or computer-implemented loop logic. In a further step represented by box 103, it is determined, based on the detected variation of the first indication and the information of the lateral acceleration, whether the first tire is mounted on the left side of a longitudinal axis of the vehicle. This step may also be carried out by the control unit. By correlating the lateral acceleration with a tire load variation over time, conclusions can be drawn to whether a tire is mounted to the left (or to the right) side of the vehicle. After this operation, further steps may optionally follow. In many cases, the result may be communicated to a display unit which could be part of an on-board computer. In some cases, an input/output-interface may allow a human operator to influence the display of tire parameters. For instance, if the on-board computer issues a warning signal, the user may quit the alarm.

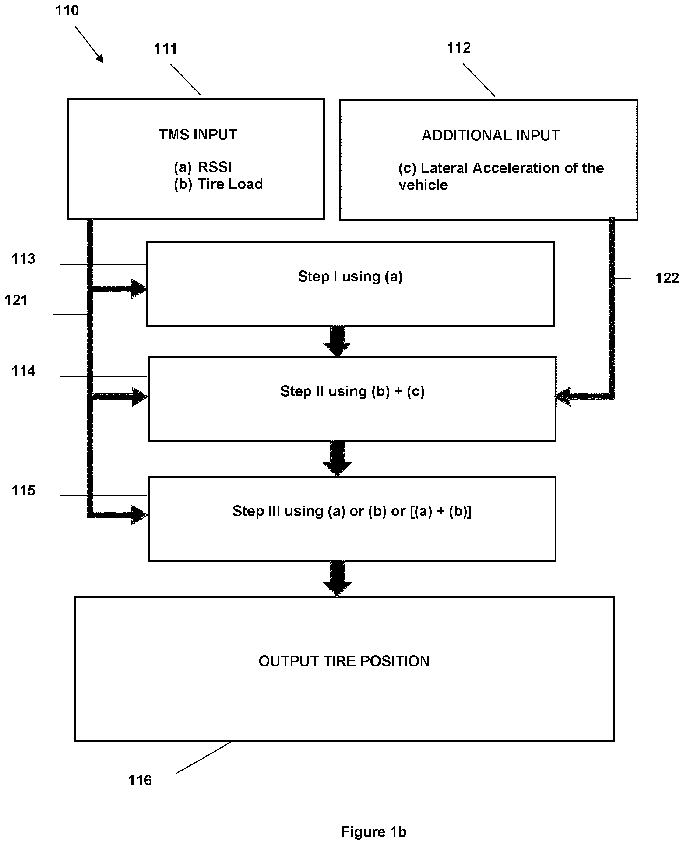

Fig. 1b shows an exemplary sequence of steps carried out to fully determine a tire position (110). In this non-exhausting example, a tire mounted sensor (TMS) provides data at least on the tire load. The tire load may be obtained by a sensor measuring the lateral and/or the longitudinal expansion of the tire when in contact with the road or any other solid underground. These techniques are not exhaustive, any other method of obtaining these values is acceptable. As the TMS transmits these data to a reception unit via radio, there is also a received signal strength index (RSSI), that depends on the distance of the receiver and other parameters such as the gain of the transmitting and receiving antenna, the employed frequency and the occurrence of any obstacles.

Fig. 1b features box 111 illustrating "TMS INPUT" including "(a) RSSI", and "(b) Tire Load". There is box 112 at the top of the figure indicating "ADDITIONAL INPUT". This box contains "(c) Lateral Acceleration of the vehicle". The latter information may be obtained from a vehicle's telematic or otherwise. Although in this specific example, the lateral acceleration is an additional input, this may not always be the case. It is possible that the lateral acceleration be measured directly from a tire, in spite of this being unusual or difficult.

The figure further shows three boxes 113, 114 and 115 aligned one above the other, each box representing a step of the method, starting from "Step I using (a)", throughout "Step II using (b) + (c)" until "Step III using (a) or (b) or [(a) + (b)]". Every box 113 - 115 is connected to the subsequent box by an arrow indicating the chronology of the actions. An arrow from the last step points towards box 116 indicating the "OUTPUT: TIRE POSITION". Arrow 121 points from box 111 containing the TMS INPUT toward any of the three boxes 113 - 115 indicating that every step uses at least one of the parameters delivered by the tire mounted sensor. Arrow 122 pointing from box 112 representing the additional input points towards step II (represented by box 114) thereby indicating that only step II requires the lateral acceleration of the vehicle.

Regarding the STEP I, it exploits the RSSI to group tires per axle. The RSSI is a measure of the power level at the receiver, which is quantified in decibel-milliwatts (dBm) on a logarithmic scale. Let P be the power of receiving antenna the relation between the power ratio and RSSI can be expressed as follows: $RSSI = 10 log \left(\frac{P}{1 mW}\right)$ where *mW* stands for milliwatt. The RSSI value changes accordingly to multiple factors such as the transmitting power, the gain of the antennas as well as the receiver-transmitter distance. As the RSSI decrease with increasing receiver-sensor distance, a vehicle's axles can be identified by looking at the distribution of the RSSI [dBm]

The TMS sensor - recognizing the ground impact and the revolution time - may be able to transmit messages at one or several fixed wheel angular position(s). During the axles' identification phase, the RSSI are combined (e.g., mean/median) per wheel transmission angle. The highest mean/median RSSI per tires is then extracted and compared to those characterizing the other tires. This comparison / ranking allows to group tires per axle.

In particular, tires closest to the receiver will show the highest RSSI. RSSI over a certain amount of data transmitted can also be used to estimate the TMS distance from the receiver. The distance could be estimated starting from a single wheel transmission angle or combined (e.g., mean/median/max) multiple transmission angles. The formula used to estimate a distance d starting from a single wheel transmission angle is the Friis transmission formula: ${P}_{r} = {P}_{t} {G}_{t} {G}_{r} {\left(\frac{λ}{4 πd}\right)}^{2}$ where Pr is the received power calculated using the RSSI, Pt is the transmission power, and λ is the wavelength of the signal. Gt and Gr denote the antenna gain of the transmitter and receiver, respectively. Within the auto-location algorithm to remove constant information (Gt, Gr and λ) the Friis formula has been adjusted considering a referential distance do $\frac{Pr}{Po} = \frac{PtGtGr}{PtGtGr} {\left(\frac{λ}{4 πd}\right)}^{2} {\left(\frac{4 πdo}{λ}\right)}^{2}$

From this expression, the distance can be estimated by $\frac{d}{do} = {\left(\frac{RSSI 0}{RSSI}\right)}^{1 / 2}$

In this example, the axle of the vehicle is determined by means of the RSSI. As explained above, the field strengths of different transmission signals may be compared and ranked. Here, the RSSI is used to determine the respective axle of a given tire. It is possible to enhance the precision of this measurement by using a single or a plurality of receiving antennas located at different positions within the vehicle. One or more antennas may also be placed asymmetrically within a vehicle.

The question whether a tire is a left or right tire of a given axle may be determined by taking into account the lateral acceleration of the vehicle and the tire load. As both parameters correlate linearly, this method provides a reliable determination of the vehicle side.

Finally, step III may be carried out. In this case, the vehicle comprises a dual-tire. In the absence of a dual-tire, step III is obsolete. Step III can either be carried out by using only the respective tire loads of the two tires coupled together forming a dual-tire. As pointed out above, the inner tire has most likely a higher load than the outer tire. Alternatively, in addition to the latter approach, the RSSI can also be considered. As the mean RSSI will generally be lower for an outer tire compared to an inner tire, a distinguishment can also be achieved or corroborated by considering the RSSI. Also, a plurality of RSSI measurements during a revolution period can aid to further differentiate both tires of a dual tire, as both tires revolve in different directions relative to their respective tire-based coordinate systems. It is important to note that Fig. 1b shows that in step III (a) RSSI may be combined with (b) Tire Load. This is not a restriction of the present, more general disclosure as, in some cases, it seems possible to make a distinguishment of both tires only using the RSSI.

The depicted embodiment choses to arrange steps I, II and III in a certain order. This is not a necessary order. It is possible to start the method by determining whether a tire is a left or right tire which corresponds to step II of fig. 1b. In general, step III will need step I and step II to be carried out before as, from the knowledge of the axle, it can be deducted whether a dual-tire is present or not. Also, it seems expedient to determine whether a (dual-)tire is a left or right tire relative to the longitudinal axis of the vehicle. Anyway, other embodiments seem possible when step III need not necessarily be carried out after the other two steps. So, the steps can be carried out in different sequences. Also, it is possible to omit one or two steps. Depending on other known parameters, one step might be enough to determine a tire's position. This may be the case, if the system uses tire IDs and all the other tires are already located. In other cases, using only one step may not be sufficient to determine the exact position of a tire.

Hence, by carrying out step II only, the mere information whether a tire is a left or a right tire relative to a longitudinal axis may only be obtained. In many situations, this might be a sufficient information.

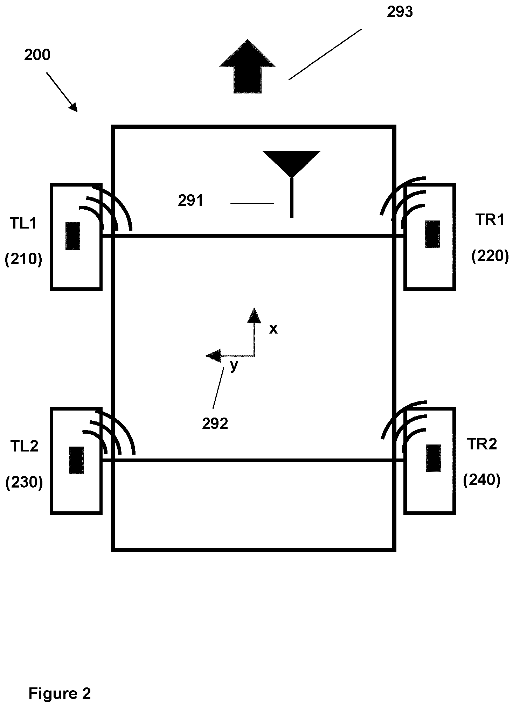

Fig. 2 depicts a vehicle (200) including two axles, a front and a rear axle, each axle comprising two tires mounted to its extremities. Arrow 293 at the top of the figure indicates the vehicles momentary moving direction toward the top of the figure. Accordingly, the front left tire 210 is marked "TL1", the front right tire 220 is marked "TR1", the rear left tire 230 is marked "TL2" and the rear right tire 240 is marked "TR2". Each tire has a sensor/transmitter group represented by a black box inside of every tire 210 - 240. The transmitter emits radio waves received by vehicle-based antenna 291 in the front of vehicle 200. Coordinate system 292 attached to vehicle 200 allows for spatial description of vehicle position. An x-axis points towards the vehicles moving position. This axis represents the longitudinal axis of the vehicle and passes through the middle points of the vehicle's axles. A y-axis is orientated perpendicularly to the x-axis and pointing to the left. This axis indicates the lateral direction of the vehicle. The origin of coordinate system 292 is placed in the vehicle's centre of gravity. In case of a left curve, the lateral acceleration of vehicle 200 will be positive along the y-axis of the vehicle 200. In case of a right curve of the vehicle 200, the lateral acceleration will be negative. As receiving antenna 291 is located in front of the first axle, the received RSSI of TL1 210 and TR1 220 are significantly higher than the respective RSSI of TL2 230 and TR2 240. Additionally, antenna 291 is placed right to the longitudinal axis (negative y-coordinate), so that antenna 291 is closer to TR1 220 than TL1 210. In this particular case, the field strength of TR1's signal should be stronger than the respective field strength of TL1. Of course, this forecast implies that every transmitter in tires 210 - 240 transmits with the same signal power. This way, a reception unit (not depicted) is able to differentiate the tire positions according to the signal strength. However, this disclosure doesn't require the use of an asymmetrically placed receiving antenna.

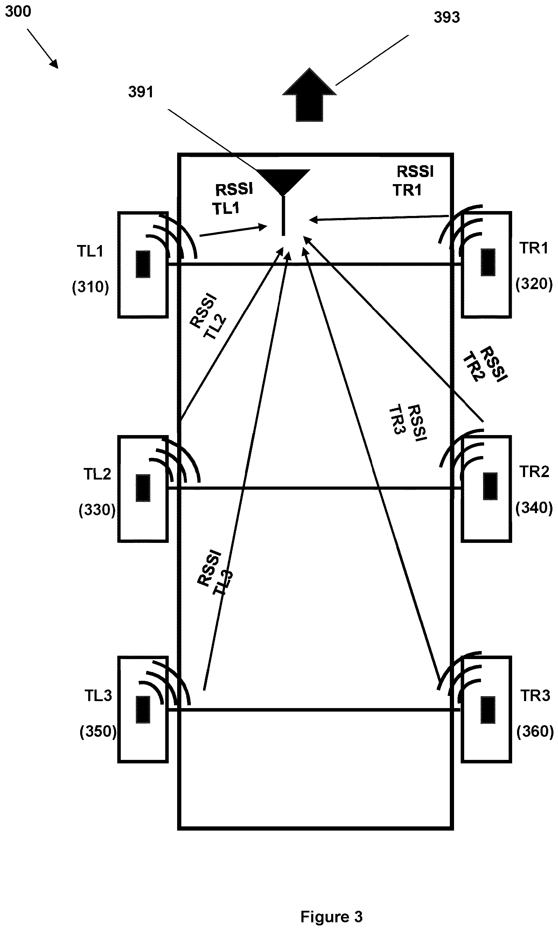

Fig. 3 depicts another vehicle (300). Vehicle 300 corresponds to vehicle 200 in fig. 2 but has some additional features. It comprises a third axle behind the second axle. The very rear axle comprises a tire marked "TL3" (350) to its left extremity and a tire marked "TR3" (360) to its right extremity. These tires comprise a sensor/transmitter group. There are six arrows, each of which point from a tire to receiving antenna 391 placed in the same position as before. Each arrow contains the information "RSSI" in addition to the tire name TL/TR1 - TL/TR3. This time, receiving antenna 391 is placed eccentrically to the left of the longitudinal axis of vehicle 300 (positive y-axis coordinate). The receiving antenna is therefore closest to tire 310 marked "TL1". Thus, the RSSI is expected to be strongest for tire 310. This implies that every transmitter transmits with the same power level.

Fig. 3 clarifies that the reception unit (not depicted) can determine the respective axle according to the field strength of any of the transmission signals. This technique is not restricted to the use of three axles. In theory, a great number of axles can be differentiated provided the spacing between the axles is large enough and the receiving antenna provides for a sufficient sensitivity. Of course, external "noise" will become problematic at certain distances and depending on the specific surroundings. It should be noted that, even with an asymmetrically placed receiving antenna, a distinguishment between a left and a right tire will not be possible when reaching certain distances. However, this disclosure does not require the RSSI to differentiate between a left and a right tire. Nevertheless, it may additionally take the RSSI into consideration for this task if practical. When a distance becomes too far or the surrounding noise too much, one possible remedy is to install a second antenna in closer proximity to the respective axles.

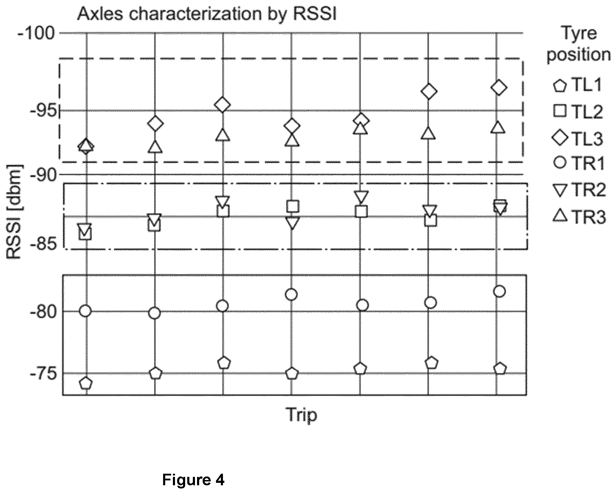

Fig. 4 shows a diagram named "Axles characterization by RSSI". On the y-axis the RSSI is indicated in dbm, ranging from -100 in the very top of the diagram down to -75 in the bottom of the diagram. The x-axis shows "Trip", indicating the single trips done by the vehicle. Any of the seven trips contains six corresponding RSSI values represented by different shapes. Each of the series of shapes represents one out of the six tires 310 - 360 represented in fig. 3. TL1 is marked by pentagons, TL2 by squares, TL3 by diamonds, TR1 by circles, TR2 by inverted triangles and TR3 by upright triangles. It can be seen that the seven pentagons corresponding to TL1 are represented in between -74 and -76 dbm. As the front left tire is closest to the receiving antenna, it is without surprise that TL1 has the highest RSSI. Similarly, the RSSI of TR1 is still quite strong as the front right tire is second closest to the receiving antenna. The RSSI represented by the circles are all in between -80 and -79 dbm. Next follow the shapes representing TL2 and TR2. These are located within a band of -85 to -90 dbm. Finally, the respective RSSI for TR3 and TL3 are situated between -90 and -97. It can be seen that measure precision decreases with growing distance and weaker signals. However, it is very clear, that TL1 and TR1, both belonging to the first axle, are framed within a distinctive band of RSSI which is represented with a dashed frame in figure 4. Likewise, TL2 and TR2, both belonging to axle 2, can clearly be distinguished from the other tires mounted to different axles. The second axle is marked by a dash and lined frame. Lastly, the rearmost axle's tires are within a ban of -91 to -97 dbm, so they are distinct from the other axles. The measures corresponding to this axle are framed by a full-line circumference. This graphic representation shows that a determination of the axle works well with a single antenna and three axles.

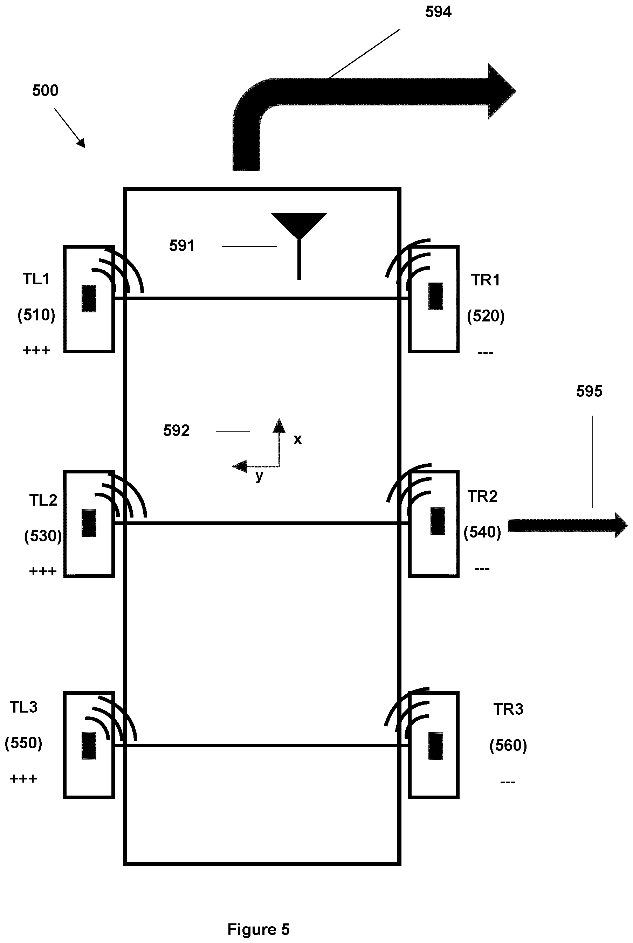

Fig. 5 shows vehicle 300 depicted in fig. 3 named vehicle 500. This time a black arrow (594) in the top of the figure indicates that vehicle 500 is taking a right curve. Subsequently, black arrow 595 shows the lateral acceleration pointing to the right. Its value is negative along the y-axis. Next to any of the right tires TR1 - TR3 (520, 540 and 560), a negative load variation over time of the right tires is represented by "---". Correspondingly, a positive load variation over time of the left tires TL1 - TL3 (510, 530, 550) is indicated by "+++". This figure shows step II in figure 1b. By observing load variations of a tire and by considering a positive or negative lateral acceleration 595 of vehicle 500, it is possible to infer whether a tire is left or right of the longitudinal axis. This step may or may not be combined with the determination of the respective axle according to fig. 2 - 4.

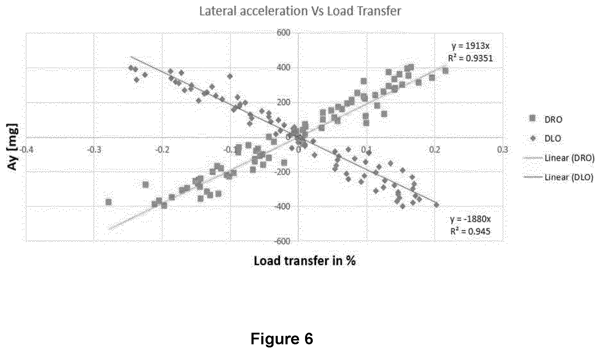

Fig. 6 shows a diagram named "Lateral acceleration Vs Load Transfer". The x-axis represents the load transfer in % and ranges from -0,4 to +0,4. The y-axis represents "Ay [mg]". This value translates the lateral acceleration of the vehicle along the vehicle's y-axis in Fig. 5. The unit "mg" refers to one thousandth of the earth's gravity at surface level. Its values reach from -600 till +600. Several measurements of the right tire marked "DRO" (Drive Right Outer meaning the tire mounted on a drive axle, right side and on the outer of a dual axle) are represented by squares in the diagram. These measurements essentially correlate along a regression graph represented by a linear line. Its function is marked by "y = 1913x" and its coefficient of correlation by "R² = 0,9351". Similarly, several measurements of left tire marked "DLO" (Drive Left Outer representing the tire mounted on a drive axle, left side and on the outer of a dual axle) are represented by diamonds. These values correlate along a linear graph with a functional equation of "y = -1880x" and respective coefficient of correlation of "R² = 0,945". This diagram shows a specific dependence of the tire load variation over time dependant on the lateral acceleration of the vehicle.

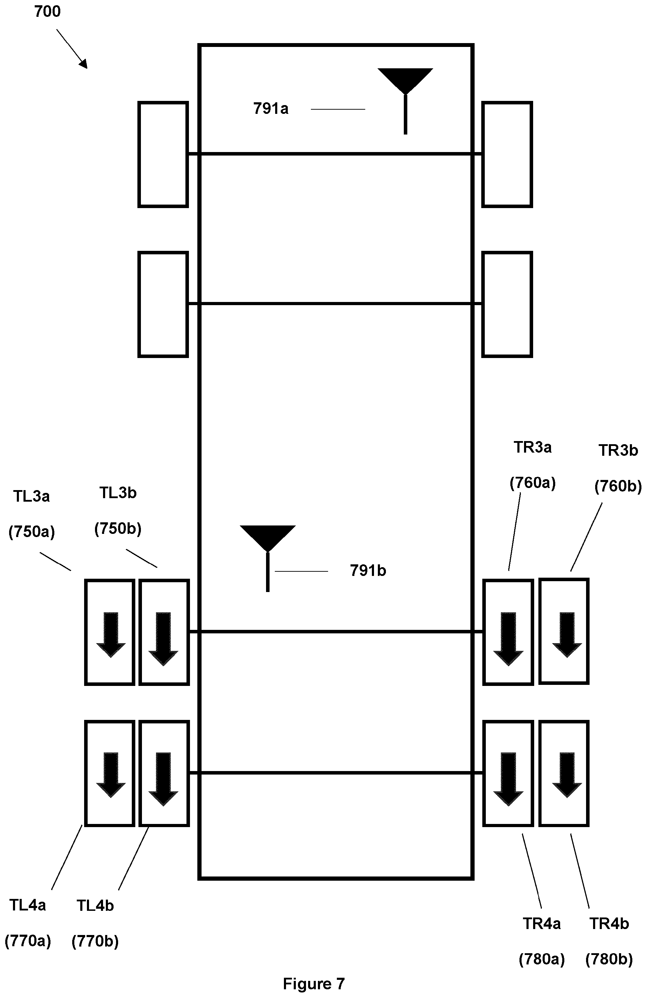

Fig. 7 shows another vehicle (700), this vehicle comprising four axles arranged from the front to the back. The two rear axles have dual tires to either side, whereas the two front axles have single tires. In the front, receiving antenna 791a is placed to the right of the longitudinal axis. In the rear, receiving antenna 791b is placed in front of the third axle, slightly excentric to the left. Each of the tires of the dual-tires (750a, 750b, 760a, 760b, 770a, 770b, 780a and 780b) includes a black arrow pointing downwards and indicating the average load on the respective tire. The length of the arrows indicates the load (gravity force pushing on the respective tire). It is shown that inner tires 750b, 760a, 770b and 780a are subject to a greater force than the outer tires 750a, 760b, 770a and 780b respectively. It should, however, be clarified that inner tires 750b, 760a, 770b and 780a do not necessarily bear the same weight as this depends on the architecture and the weight distribution of vehicle 700 and its cargo. Fig. 7 hereby shows the core principle of step III of fig. 1b which is to determine which tire of a dual-tire is an inner and which tire is an outer tire. This principle can be carried out with any number of axles comprising dual-tires. However, each tire of a dual-tire must transmit their load values to a reception unit such as receiving antenna 791a or 791b. One single receiving antenna may be sufficient.

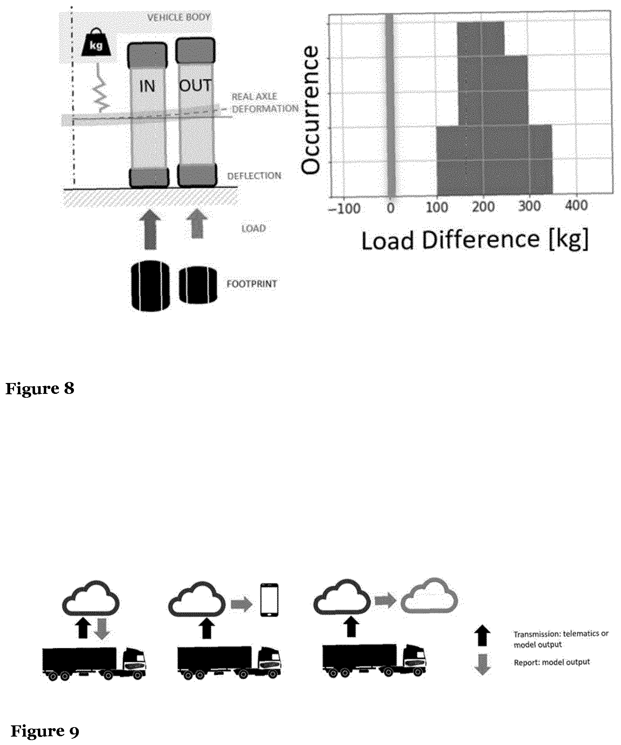

Fig. 8 shows two pictures representing the load difference between an inner and an outer tire of a dual-tire. The first picture shows the dual-tire in a sectional drawing parallel to the y-axis of a vehicle. The vehicle body is indicated by a grey part above the tires. A symbol called "kg" represents the gravity force of the vehicle (=load of the vehicle) pressing onto the tires. It can be seen that the inner tire marked "IN" is squeezed such that its height is reduced compared to the outer tire marked "OUT". Correspondingly, the tire footprint of both tires of the dual tires is shown. The inner tire has a significantly larger footprint on the road since the load on it is greater. A dashed line passing through the centre of each tire indicates the "REAL AXLE DEFORMATION". As the inner tire of the dual-tire is "squeezed" compared to the outer tire of the dual-tire, it's center lies below the center of the outer tire of the dual-tire. Consequently, the axle containing the dual-tire is slightly bent taking the shape of a parabole. The parabole's nadir is in the vehicle's middle axis (on the longitudinal axis, the lateral coordinate (y-axis) being zero). To the vehicle's extremities', the parabole representing the axle is increasing. This effect is due to the vehicle's load essentially pushing down in the area enclosed by left and right (dual-) tires. Thus, the inner tire of a dual-tire has a higher load than the respective outer tire of the dual-tire.

The second picture shows a diagram of the difference among load on the inner tire and load on the outer tire to visualize the aforementioned difference in load. On the x-axis is marked "Load Difference [kg]". The values range from -100 to 400. On the left side the word "Occurrence" is attached to the y-axis. A load distribution is represented. There is a relatively small occurrence in between 100 and 150 kg, a very large occurrence in between 150 and 250 kg, a considerable occurrence in between 250 and 300 kg, the same small occurrence as before in between 300 and 350 kg. Apart from these occurrences, other occurrences are not represented. This diagram shows the repartition of the load differences (load on the inner tire minus load on the outer tire in kilograms). In this case, only positive load differences have occurred. However, it may be possible that negative load differences occur. This depends on different factors such as a vehicle's geometry, vehicle dynamics and the type of tires mounted to the vehicle. Knowing a standard load distribution of a given vehicle helps to better determine whether a tire is an inner or outer tire of a dual-tire. Similarly, measurement errors can be estimated.

Fig. 9 shows three representations of a vehicle and a symbolic cloud. In each representation, a black arrow shows from the lorry to the cloud indicating a transmission of telematics or model output. In the first picture, a grey arrow shows from the cloud back to the vehicle representing "Report: model output". In the second picture, the same grey arrow shows to a mobile phone. In the last picture, the grey arrow shows to another symbolic cloud. The clouds in the picture represent network-based communication systems.

This network can even carry out the algorithm of the method. Hence, the algorithm could run directly on the TMS, within a reception unit, any other vehicle based computing unit (such as the on-board computer) or on the network gateway. Another possibility is to run the algorithm directly in the cloud. The algorithm output could be reported in the vehicle (and/or devices connected to the vehicle) and/or in a smart phone and/or on the fleet management platform and/or in the sensor owner reporting system. Fleet management platform could be deployed on the same cloud of the model or in a different cloud (e.g., the Original Equipment Manufacturer cloud).

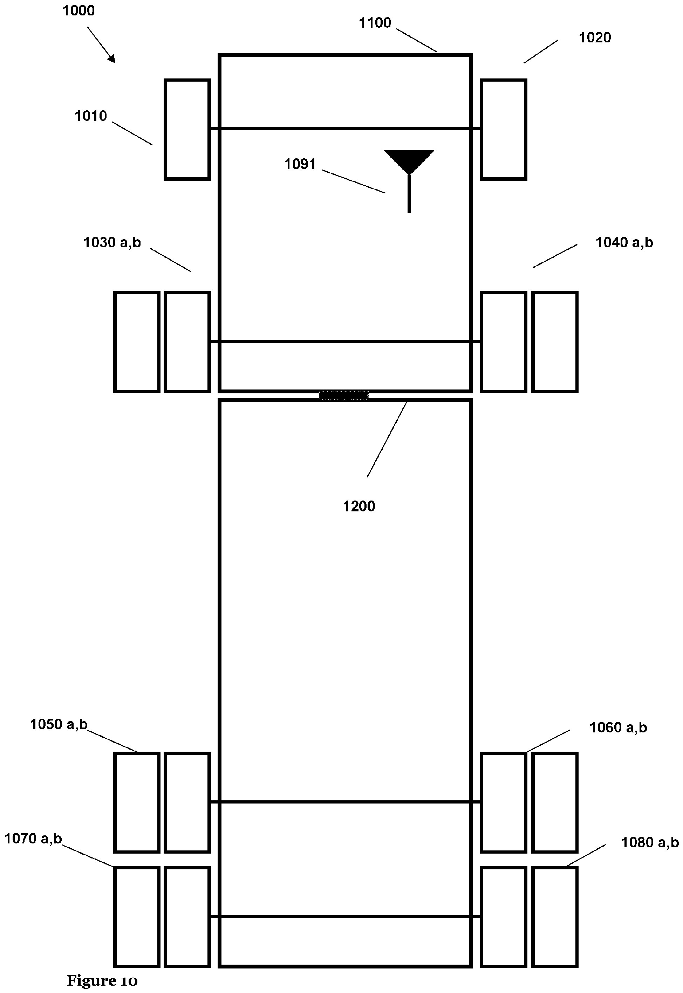

Fig. 10 shows vehicle 1000 including a towing vehicle 1100 and a trailer vehicle 1200. As can be seen, towing vehicle 1100 can feature an axle including dual tires (1030 a,b and 1040 a,b) to either side. Different configurations are possible. It is also possible that a towing device comprises more than two axles. In the same manner, trailer vehicle 1200 features two axles each comprising four tires (1050 a,b; 1060 a,b; 1070 a,b and 1080 a,b) mounted in pairs of two. However, this is not imperative. It is possible that the trailer has more than two axles. It is also possible that one or more axles comprise only two tires, one mounted to each extremity of the axle.

## Claims

1. A method for determining the position of a first tire of a vehicle, the method comprising:
obtaining a first indication of a load of the first tire;
detecting a variation of the first indication over time;
obtaining an information of a lateral acceleration of the vehicle;
determining, based on the detected variation of the first indication and the information of the lateral acceleration, whether the first tire is mounted on the left or right side of a longitudinal axis of the vehicle.

2. The method according to claim 1, further comprising:
determining, based on a field strength of a first wireless transmission signal of the first tire, preferably of a first wireless transmission signal of the first indication, information on the distance of the first tire.

3. The method according to claim 2, further comprising:
obtaining a second wireless transmission signal of a second tire, preferably a second wireless transmission signal of a second indication of a load of the second tire, wherein the second tire is mounted to the vehicle on a different axle than the first tire;
determining, based on the field strength of the first wireless transmission signal of the first tire, preferably of the first wireless transmission signal of the first indication, and a field strength of the second wireless transmission signal of the second tire, preferably of the second wireless transmission signal of the second indication, which of tires is mounted to which axle.

4. The method according to one of the preceding claims, further comprising:
obtaining a third indication of a load of a third tire, wherein the first and third tire form a dual tire;
determining, based on the first indication and the third indication, which of the first tire and the third tire is an inner and which is an outer tire of the dual tire.

5. The method according to claim 4, wherein determining which of the first tire and the third tire is the inner and which is the outer tire of the dual tire comprises:
comparing the load of the tires to a vehicle specific tire load distribution profile.

6. The method according to any of the preceding claims, further comprising:
obtaining a third wireless transmission signal of a third tire, preferably of a third wireless transmission signal of a third indication of a load of a third tire, wherein the first and third tire form a dual-tire;
determining, based on a field strength of the first wireless transmission signal of the first tire, preferably of the first wireless transmission signal of the first indication, and a field strength of the third wireless transmission signal of the third tire, preferably of the third wireless transmission signal of the third indication, which of the first tire and the third tire is an inner and which is an outer tire of the dual tire.

7. The method according to any of the preceding claims, further comprising:
obtaining information about at least one of: a pressure, a temperature, a residual tread depth, and a remaining lifetime of at least the first tire.

8. The method according to claim 7, further comprising:
displaying the position and the information about at least one of: the pressure, the temperature, the residual tread depth, the remaining lifetime and the load of at least the first tire.

9. The method according to claim 7 or 8, further comprising:
determining whether at least one of the pressure, the temperature, the residual tread depth, the remaining lifetime and the load of at least the first tire is within a predefined range;
if at least one of the pressure, the temperature, the residual tread depth, the remaining lifetime and the load is not within the predefined range, indicating the position and a respective deviation.

10. The method according to any of the preceding claims, further comprising:
transmitting information on a determined position of at least the first tire to a network-based information system such as a web-based cloud.

11. An apparatus comprising means to perform the method according to any of claims 1 to 10.

12. A computer program comprising instructions to perform the method according to any of claims 1 to 10 or to operate the apparatus according to claim 11.

13. A vehicle comprising a plurality of axles, each axle comprising at least two tires, wherein the vehicle comprises:
means for obtaining an indication of a load of each of the tires,
means for detecting the variation of the indication over time,
means for obtaining information of a lateral acceleration of the vehicle,
means for determining, based on the detected variations of the indications and the information of the lateral acceleration, information on a positioning of each of the tires as to whether a respective tire is mounted on the left or right side of a longitudinal axis of the vehicle.

14. The vehicle according to claim 13, the vehicle further comprising a reception unit, wherein the reception unit is configured to determine the position of any of each of the tires mounted to the vehicle, wherein the determination is further based on at least one of: a field strength of the respectively transmitted signal, and vehicle dynamics of the vehicle.

15. The vehicle according to one of claims 13 to 14, further comprising a tire monitoring system configured to display at least one of: a pressure, a temperature, a residual tread depth, a remaining lifetime, and a tire load of any of the tires according to their position.
